# EUROPÄISCHE PATENTSCHRIFT

(11) **EP 1 719 366 B1**
(45) Veröffentlichungstag und Bekanntmachung des Hinweises auf die Patenterteilung: **24.06.2009**
(21) Anmeldenummer: 05701422.7
(22) Anmeldetag: 03.01.2005
(51) Int. Cl.: H04W 88/08

(54) **VERFAHREN ZUM ÜBERTRAGEN VON DATEN INNERHALB EINER BASISSTATION EINES MOBILFUNKSYSTEMS SOWIE ENTSPRECHENDE BASISSTATION**
METHOD FOR TRANSMITTING DATA INSIDE A BASE STATION OF A MOBILE RADIO SYSTEM, AND CORRESPONDING BASE STATION
PROCEDE DE TRANSMISSION DE DONNEES A L'INTERIEUR D'UNE STATION DE BASE DE SYSTEME RADIOTELEPHONIQUE MOBILE ET STATION DE BASE CORRESPONDANTE

(30) Priorität: 23.02.2004 EP 04004076
(43) Veröffentlichungstag der Anmeldung: 08.11.2006
(73) Patentinhaber: Nokia Siemens Networks GmbH & Co. KG, 81541 München (DE)
(72) Erfinder: MERZ, Peter, 81373 München (DE); SPLETT, Armin, 89081 Ulm (DE)
(86) Internationale Anmeldenummer: PCT/EP2005/050006
(87) Internationale Veröffentlichungsnummer: WO 2005/081562

(56) Entgegenhaltungen:
- WO-A-97/44914
- DE-C- 10 201 642
- US-A1- 2003 032 454
- "Common Public Radio Interface (CPRI); Interface Specification" CPRI SPECIFICATION V1.0, [Online] 30. September 2003 (2003-09-30), Seiten 1-54, XP002291001 Gefunden im Internet: URL:www.cpri.info> [gefunden am 2004-08-02]

## Beschreibung

Die Erfindung betrifft ein Verfahren zum Übertragen von Daten innerhalb einer Basisstation eines Mobilfunksystems sowie eine entsprechende Basisstation.

In Mobilfunksystemen erfolgt eine Kommunikation von Teilnehmern des Mobilfunksystems über Funkwellen. Es sind eine Vielzahl von Mobilfunksystemen bekannt, beispielsweise für die zweite Mobilfunkgeneration GSM (Global System of Mobile Communication) oder IS-95 und für die dritte Mobilfunkgeneration UMTS-FDD (Universal Mobile Telecommunication System-Frequency Division Duplex). Weiterhin sind Mobilfunksysteme realisierbar, die nach einem der so genannten WLAN- (Wireless Local Area Network) oder WMAN (Wireless Metropolitan Area Network) Standards konzipiert sind, wie beispielsweise die Standards 802.x.

Die Funkzugangspunkte von Mobilfunksystemen, mit denen die Teilnehmer über die Luftschnittstelle kommunizieren, werden häufig auch als Basisstationen bezeichnet. Mehrere Unternehmen haben gemeinsam mit Siemens eine Schnittstelle innerhalb solcher Basisstationen definiert, die zunächst für UMTS-FDD und später auch für andere Standards genutzt werden soll. Diese Schnittstelle ist unter der Bezeichnung Common Public Radio Interface (CPRI) bekannt. CPRI verbindet den so genannten Radio Equipment Control-Teil einer Basisstation mit ihrem so genannten Radio Equipment-Teil. Der Radio Equipment Control-Teil beinhaltet unter anderem die Basisbandverarbeitung der zu übertragenden bzw. der empfangenen Signale, während im Radio Equipment Teil die Umsetzung von zu sendenden Signalen in das Hochfrequenzband bzw. von empfangenen Signalen ins Basisband erfolgt.

Aus DE 102 01 642 C1 ist ein Funkkommunikationssystem bekannt, bei dem über eine Basisstation sowohl erste Kommunikationsverbindungen als auch zweite Kommunikationsverbindungen getrennt voneinander zu einer ersten bzw. zweiten Signalverarbeitungseinrichtung gelangen. Nachfolgend werden diese Signale einem "gemeinsamen Hochfrequenzteil" der Basisstation zur Abstrahlung zugeführt. Das gemeinsame Hochfrequenzteil wird zur Leistungsverstärkung und zum Senden bzw. Empfangen der Signale über eine Antenne verwendet.

Aus US 2003/0032454 A1 ist eine Architektur zur Ansteuerung einer so genannten "digital shared antenna" bekannt. Diese Antenne wird als gemeinsames Antennensystem durch mehrere Serviceprovider benutzt. Zur Ansteuerung der Antenne werden so genannte "backhauls" benutzt.

Aus WO 97/44914 A1 ist eine Anordnung bekannt, bei der mehrere PCS-Provider eine gemeinsame "cell site antenna" verwenden.

Aus "Common Public Radio Interface (CPRI); Interface Specification" CPRI SPECIFICATION V1.0, 30.September 2003 (2003-09-30) ist eine Anordung bekannt, bei der Basisbanddaten eines Mobilfunksystems über eine serielle Schnittstelle übertragen werden.

Um Kosten bei der Netzplanung und bei der Installation zu sparen, kann es sinnvoll sein, Basisstationen bzw. Funkzugangspunkte unterschiedlicher Mobilfunksysteme am selben Standort vorzusehen. Der Erfindung liegt die Aufgabe zugrunde, dieses in vorteilhafter Weise zu ermöglichen.

Diese Aufgabe wird mit einem Verfahren gemäß Anspruch 1 sowie einer Basisstation gemäß dem nebengeordneten Anspruch gelöst. Ausführungsformen und Weiterbildungen der Erfindung sind Gegenstand abhängiger Ansprüche.

Das erfindungsgemäße Verfahren zum Übertragen von Daten innerhalb einer Basisstation eines ersten Mobilfunksystems sieht vor, dass Daten des ersten Mobilfunksystems in einer Basisbandeinheit der Basisstation im Basisband verarbeitet werden und in einer Hochfrequenzeinheit der Basisstation vom bzw. in den Hochfrequenzbereich umgesetzt werden, dass die Daten des ersten Mobilfunksystems zwischen der Basisbandeinheit und der Hochfrequenzeinheit über eine Schnittstelle übertragen werden und dass zu sendende Daten eines zweiten Mobilfunksystems vor einer Bearbeitung im Basisband und/oder empfangene Daten des zweiten Mobilfunksystems nach einer Bearbeitung im Basisband ebenfalls über die Schnittstelle übertragen werden.

Während zu sendende Daten des ersten Mobilfunksystems also vor ihrer Übermittlung über die Schnittstelle im Basisband verarbeitet und erst nach der Übermittlung über die Schnittstelle in den Hochfrequenzbereich umgesetzt werden, erfolgt für zu sendende Daten des zweiten Mobilfunksystems das Übertragen über die Schnittstelle noch vor einer Basisbandbearbeitung. In analoger Weise erfolgt somit für empfangene Daten des ersten Mobilfunksystems die Basisbandverarbeitung erst nach dem Übertragen über die Schnittstelle, während die Basisbandverarbeitung für empfangene Daten des zweiten Mobilfunksystems bereits vor dem Übertragen über die Schnittstelle durchgeführt wird.

Dies bedeutet, dass für die Übermittlung der Daten des zweiten Mobilfunksystems vom Standort der Hochfrequenzeinheit zum Standort der Basisbandeinheit der Basisstation des ersten Mobilfunksystems sowie in umgekehrter Richtung keine separate Schnittstelle vorgesehen sein muss. Somit entfällt die Notwendigkeit einer zusätzlichen Verbindung zur Übermittlung der Daten des zweiten Mobilfunksystems. Dies ist insbesondere dann von Vorteil, wenn der Abstand zwischen der Hochfrequenzeinheit und der Basisbandeinheit beträchtlich ist, wie beispielsweise wenn die Basisbandeinheit im Keller eines Gebäudes und die Hochfrequenzeinheit auf dem Dach des Gebäudes angeordnet ist.

Daher ermöglicht die Erfindung in vorteilhafter Weise die Verwendung einer ohnehin für die Basisstation des ersten Mobilfunksystems vorgesehenen Schnittstelle zwischen der Basisbandeinheit und der Hochfrequenzeinheit auch für die Übertragung der Daten des zweiten Mobilfunksystems, ohne dass aufwendige Anpassungen bei der Konzipierung der Basisstation des ersten Mobilfunksystems vorgenommen werden müssen.

Nach einer Weiterbildung der Erfindung sind die Daten des zweiten Mobilfunksystems Ein- und/oder Ausgangsdaten eines Funkzugangspunktes des zweiten Mobilfunksystems.

Bei den beiden Mobilfunksystemen kann es sich um beliebige Mobilfunksysteme handeln, bei denen eine Kommunikation mit mobilen Teilnehmern über Funkwellen erfolgt. Wenigstens eines der beiden Mobilfunksysteme kann beispielsweise zellular aufgebaut sein, dass heißt eine Vielzahl von Funkzellen mit wenigstens einer Basisstation bzw. einem Funkzugangspunkt aufweisen, der zur Versorgung der jeweiligen Funkzelle dient.

Nach einer Ausführungsform der Erfindung handelt es sich bei der Schnittstelle zwischen der Basisbandeinheit und der Hochfrequenzeinheit um eine serielle Schnittstelle, über die die Daten der beiden Mobilfunksysteme im Zeitmultiplex übertragen werden. Nach einer bevorzugten Ausführungsform handelt es sich bei der seriellen Schnittstelle um eine nach dem eingangs erwähnten CPRI-Standard. Dabei kommt jede Version des CPRI-Standards (die aktuelle Version ist die Version 1.0) in Betracht, auch zukünftige Versionen.

Nach einer Ausführungsform der Erfindung sind die Daten des ersten Mobilfunksystems der physikalischen Schicht und die Daten des zweiten Mobilfunksystems einer höheren Schicht eines Schichtenmodells, insbesondere des ISO-OSI- (International Standards Organisation-Open System Interconnect-) Schichtenmodells zuzuordnen.

Nach einer Weiterbildung der Erfindung senden bzw. empfangen die Basisstation des ersten Mobilfunksystems und der Funkzugangspunkt des zweiten Mobilfunksystems zu übertragende Signale mit einer gemeinsamen Sende- und/oder Empfangsantenne. Hierdurch wird die Notwenigkeit von separaten Antennen vermieden.

Unabhängig davon, ob gemeinsame Sende- oder Empfangsantennen benutzt werden, sieht eine Weiterbildung der Erfindung vor, dass der Funkzugangspunkt des zweiten Mobilfunksystems und die Hochfrequenzeinheit der Basisstation des ersten Mobilfunksystems baulich in eine gemeinsame Einheit integriert sind. Beide können jedoch auch baulich separat voneinander realisiert sein.

Die erfindungsgemäße Basisstation für das erste Mobilfunksystem weist Mittel bzw. Einheiten auf, die die Durchführung des erfindungsgemäßen Verfahrens unterstützen. Ausführungsformen und Weiterbildungen der erfindungsgemäßen Basisstation weisen entsprechende Mittel bzw. Einheiten auf, um die Ausführungsformen und Weiterbildungen des erfindungsgemäßen Verfahrens durchführen zu können.

Die Erfindung wird im Folgenden anhand von in den Figuren dargestellten Ausführungsbeispielen näher erläutert. Es zeigen:
- Figur 1: ein erstes Ausführungsbeispiel der Erfindung und
- Figur 2: ein zweites Ausführungsbeispiel der Erfindung.

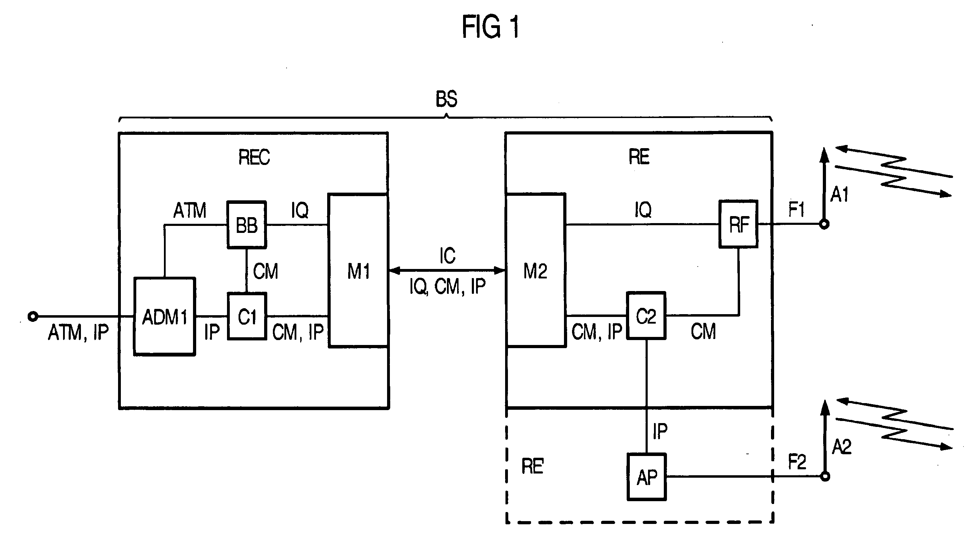

Figur 1 zeigt eine Basisstation BS eines ersten Mobilfunksystems nach dem UMTS-FDD-Standard und einen Funkzugangspunkt AP eines zweiten Mobilfunksystems nach einem WLAN oder WMAN Standard, beispielsweise 802.11 oder 802.16. Bei anderen Ausführungsbeispielen der Erfindung können die Basisstation BS und der Funkzugangspunkt AP jedoch auch beliebigen anderen Mobilfunksystemen zugeordnet sein, beispielsweise können beide Mobilfunksystemen zugeordnet sein, die demselben Standard entsprechen, jedoch von unterschiedlichen Betreibern betrieben werden.

Die Basisstation BS in Figur 1 weist eine erste Einheit REC (Radio Equipment Control) auf und eine zweite Einheit RE (Radio Equipment), die über eine Schnittstelle IC nach dem CPRI-Standard miteinander verbunden sind. In der ersten Einheit REC erfolgt die Steuerung und Verwaltung der Basisstation durch einen ersten Prozessor C1, der entsprechende Steuersignale CM zur Steuerung weiterer Funktionseinheiten innerhalb der Basisstation BS erzeugt. Über die Steuersignale CM erfolgt beispielsweise die Steuerung der Sendeleistung, mit der zu sendende Signale über die zweite Einheit RE auszusenden sind. Die zweite Einheit RE weist einen zweiten Prozessor C2 zur Verarbeitung von vom ersten Prozessor C1 übermittelten Steuersignalen CM und zur entsprechende Aussteuerung der Hochfrequenzeinheit RF auf. Wenigstens ein Teil der Steuersignale CM wird daher über die Schnittstelle IC zur zweiten Einheit RE und weiter zum zweiten Prozessor C2 übertragen. Auch in umgekehrter Übertragungsrichtung erfolgt die Übermittlung von Steuersignalen CM vom zweiten Prozessor C2 zum ersten Prozessor C1. Es handelt sich dabei beispielsweise um Steuersignale zur Automatic Gain Control und zur Empfangssignalstärke.

Die Steuersignale CM des ersten Prozessors C1 gelangen über die Schnittstelle IC zu einem zweiten Prozessor C2 innerhalb der zweiten Einheit RE, der eine Auswertung der Steuersignale CM vornimmt und die Hochfrequenzeinheit RF in entsprechender Weise ansteuert.

Die erste Einheit REC der Basisstation BS beinhaltet eine Basisbandeinheit BB zum Verarbeiten von Daten IQ des ersten Mobilfunksystems im Basisband. Die Basisbandeinheit BB führt unter anderem eine Kanalkodierung, ein Interleaving, ein Spreizen und eine Verwürfelung von zu sendenden Daten des ersten Mobilfunksystems durch. Ebenso führt die Basisbandeinheit BB eine Kanaldekodierung, ein De-Interleaving, ein Entspreizen und ein Entwürfeln von empfangenen Daten des ersten Mobilfunksystems durch.

In der zweiten Einheit RE der Basisstation BS befindet sich eine Hochfrequenzeinheit RF, mittels derer die Daten IQ, die zuvor von der Basisbandeinheit BB erzeugt und über die Schnittstelle IC übertragen wurden, digital/analog gewandelt werden, in den Hochfrequenzbereich umgesetzt und anschließend leistungsverstärkt und als Funksignale F1 über eine erste Antenne A1 abgestrahlt werden. In umgekehrter Übertragungsrichtung werden über die erste Antenne A1 empfangene Funksignale F1 des ersten Mobilfunksystems innerhalb der Hochfrequenzeinheit RF rauscharm verstärkt, vom Hochfrequenzbereich ins Basisband umgesetzt und anschließend analog/digital gewandelt. Die empfangenen Daten IQ werden anschließend über die Schnittstelle IC zur Basisbandeinheit BB übertragen. Nach der Basisbandverarbeitung in der Basisbandeinheit BB werden die empfangenen Daten des ersten Mobilfunksystems als ATM - Datenpakete ATM (bei anderen Ausführungsbeispielen kann es sich beispielsweise auch um IP-Datenpakete oder um leitungsvermittelte Daten (circuit switched) handeln) über einen ersten Add-Drop-Multiplexer ADM1 einem Ausgang der Basisstation BS zugeführt, von wo eine Übermittlung an einen (in der Figur 1 nicht dargestellten) Basisstationscontroller bzw. Funknetzcontroller erfolgt. In umgekehrter Übertragungsrichtung gelangen ATM-Datenpakete ATM vom Basisstationscontroller über den ersten Add-Drop-Multiplexer ADM1 zur Basisbandeinheit BB der Basisstation BS und von dort nach einer Basisbandverarbeitung über die Schnittstelle IC zur Hochfrequenzeinheit RF innerhalb der zweiten Einheit RE der Basisstation BS.

Über die Schnittstelle IC zwischen den beiden Einheiten REC, RE der Basisstation BS werden im Zeitmultiplex neben den Basisbanddaten IQ und den Steuersignalen CM auch Daten IP des zweiten Mobilfunksystems, nämlich Ein- und Ausgangsdaten des Funkzugangspunktes AP im Zeitmultiplex übertragen. Dabei erfolgt eine Übertragung der (Nutz-)Daten IQ des ersten Mobilfunksystems nach dem CPRI IQ Protokoll, während die Steuersignale CM mittels HDLC (High Data Link Control)- oder Ethernet-Protokoll und die Daten IP des zweiten Mobilfunksystems nach_dem Ethernet-Protokoll oder HDLC-Protokoll übertragen werden.

Die Daten IP des zweiten Mobilfunksystems haben das Format von IP- (Internet Protocol) Datenpaketen. Der Funkzugangspunkt AP weist dieselbe Funktionalität auf wie ein herkömmlicher Funkzugangspunkt des betrachteten zweiten Mobilfunksystems, in diesem Fall wie ein herkömmlicher Funkzugangspunkt nach dem 802.11 oder 802.16 Standard. Der Funkzugangspunkt AP kann, wie in Figur 1 dargestellt, baulich separat von der zweiten Einheit RE der Basisstation BS des ersten Mobilfunksystems ausgeführt sein. Es ist jedoch auch möglich, dass der Funkzugangspunkt AP in die zweite Einheit RE baulich integriert ist (entsprechend der gestrichelt in Figur 1 angedeuteten zweiten Einheit RE').

Im Funkzugangspunkt AP der Figur 1 erfolgt sowohl eine Basisbandverarbeitung der Daten IP, als auch ihre Umsetzung vom Basisband in den Hochfrequenzbereich bzw. umgekehrt. Über eine zweite Antenne A2 empfangene Funksignale F2 des zweiten Mobilfunksystems werden dem Funkzugangspunkt AP zugeführt, dort ins Basisband umgesetzt und einer Basisbandverarbeitung unterzogen. Als Ausgangssignale des Funkzugangspunkts AP werden die Daten IP in Form von IP-Paketen dem zweiten Prozessor C2 innerhalb der zweiten Einheit RE der Basisstation BS zugeführt. Bei diesem Ausführungsbeispiel hat der zweite Prozessor C2 nämlich die zusätzliche Funktionalität eines Routers für die Daten IP des zweiten Mobilfunksystems zwischen der Schnittstelle IC und dem Funkzugangspunkt AP und in umgekehrter Richtung (bei anderen Ausführungsbeispielen der Erfindung kann diese Funktionalität des zweiten Prozessors auch getrennt von den sonstigen Funktionen des zweiten Prozessors durch einen weiteren Prozessor realisiert sein). Der zweite Prozessor C2 überträgt die Daten IP des Funkzugangspunkts AP über die Schnittstelle IC zum ersten Prozessor C1 innerhalb der ersten Einheit REC. Der erste Prozessor C1 leitet die Daten IP des Funkzugangspunkts AP anschließend an den ersten Add-Drop-Mulitplexer ADM1 weiter, der die Daten IP anschließend einem nicht dargestellten Gateway zum Internet zuführt. In umgekehrter Übertragungsrichtung gelangen durch den Funkzugangspunkt AP zu übertragende Daten IP aus dem Internet zunächst über den ersten Add-Drop-Multiplexer ADM1 zum ersten Prozessor C1. Vom ersten Prozessor C1 erfolgt eine Übertragung der Daten IP über die Schnittstelle IC zum zweiten Prozessor C2 und von dort zum Funkzugangspunkt AP, der nach Basisbandverarbeitung und Umsetzung in den Hochfrequenzbereich die Daten als Funksignale F2 zur zweiten Antenne A2 überträgt, von wo sie anschließend über die Luft ausgesendet werden.

Die erste Einheit REC und die zweite Einheit RE in Figur 1 weisen jeweils einen Multiplexer und Demultiplexer M1, M2 auf. Sie dienen dazu, die zu übertragenen bzw. empfangenen (Nutz-)Daten IQ der Basisstation BS, die Steuersignale CM des ersten Prozessors C1 sowie die Daten IP des Funkzugangspunktes AP auf die serielle Schnittstelle IC zu multiplexen bzw. von der seriellen Schnittstelle IC auf die entsprechenden Leitungen innerhalb der Einheiten REC, RE zu demultiplexen. Zwischen dem ersten Prozessor C1 und dem ersten Multiplexer M1 sowie zwischen dem zweiten Multiplexer M2 und dem zweiten Prozessor C2 erfolgt die Übertragung der Steuersignale CM und der Daten IP des zweiten Mobilfunksystems im Zeitmultiplex. Ebenso erfolgt der Empfang der Daten ATM, IP am Eingang der Basisstation BS und auch die Übertragung der Daten in umgekehrter Übertragungsrichtung über eine gemeinsame Leitung im Zeitmultiplex.

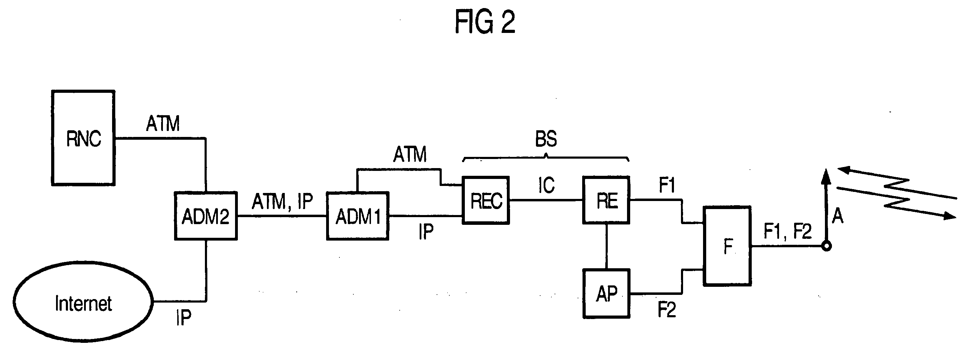

Figur 2 zeigt ein zweites Ausführungsbeispiel der Erfindung, bei dem die Basisstation BS und der Funkzugangspunkt AP (der beispielsweise wiederum in die zweite- Einheit RE der Basisstation BS integriert sein kann) ihre Funksignale F1, F2 über eine gemeinsame Antenne A senden und empfangen. Hierzu werden die Funksignale F1, F2 in einer Einheit F kombiniert und über die Antenne A ausgestrahlt bzw. in umgekehrter Übertragungsrichtung von der Einheit F voneinander getrennt. Letzteres ist insbesondere dann einfach durchzuführen, wenn sich die Funksignale F1, F2 in unterschiedlichen Frequenzbändern befinden. Im Gegensatz zum Ausführungsbeispiel aus Figur 1 ist bei Figur 2 der erste Add-Drop-Multiplexer ADM1 am Ein- bzw. Ausgang der Basisstation BS nicht als deren Bestandteil baulich in die erste Einheit REC der Basisstation BS integriert, sondern separat von dieser ausgeführt. Vom ersten Add-Drop-Multiplexer ADM1 erfolgt über eine Verbindung (z.B. SDH (Synchronous Digital Hierarchy) oder PDH basierend) eine Übertragung der Datenpakete ATM, IP zu einem zweiten Add-Drop-Multiplexer ADM2, der über die Luftschnittstelle empfangene Datenpakete ATM, IP demultiplext und die den Daten IQ des ersten Mobilfunksystems entsprechende Datenpakete ATM einem Basisstationscontroller RNC zuführt und die Daten IP des zweiten Mobilfunksystems über ein Gateway dem Internet zuführt. Zu sendende Datenpakete ATM, IP werden durch den zweiten ADM Multiplexer ADM2 auf die gemeinsame Leitung zum ersten Add-Drop-Multiplexer ADM1 gemultiplext.

## Patentansprüche

1. Verfahren zum Übertragen von Daten zwischen einer ersten Einheit (REC) und einer zweiten Einheit (RE) innerhalb einer Basisstation (BS) eines ersten Mobilfunksystems,
- bei dem Daten (IQ) des ersten Mobilfunksystems seitens der ersten Einheit(REC) in einer Basisbandeinheit (BB) im Basisband verarbeitet werden,
- bei dem die im Basisband verarbeiteten Daten (IQ) des ersten Mobilfunksystems zwischen der Basisbandeinheit (BB) der ersten Einheit (REC) und einer Hochfrequenzeinheit (RF) der zweiten Einheit (RE) über eine serielle Schnittstelle (IC) übertragen werden,
- bei dem die Daten (IQ) des ersten Mobilfunksystems seitens der zweiten Einheit (RE) in der Hochfrequenzeinheit (RF) vom bzw. in den Hochfrequenzbereich umgesetzt werden,
**dadurch gekennzeichnet,**
- **dass** zu sendende Daten (IP) eines zweiten Mobilfunksystems vor einer Bearbeitung im Basisband von der ersten Einheit (REC) zusammen mit den im Basisband verarbeiteten Daten (IQ) des ersten Mobilfunksystems über die Schnittstelle (IC) zur zweiten Einheit (RE), übertragen werden, und
- **dass** die über die Schnittstelle (IC) übertragenen Daten (IP) des zweiten Mobilfunksystems in einem Funkzugangspunkt (AP) des zweiten Mobilfunksystems sowohl im Basisband verarbeitet als auch in den Hochfrequenzbereich umgesetzt werden.

2. Verfahren nach Anspruch 1, **dadurch gekennzeichnet,**
- **dass** empfangene Daten (IP) des zweiten Mobilfunksystems im Funkzugangspunkt (AP) vom Hochfrequenzbereich umgesetzt und im Basisband verarbeitet werden, und
- **dass** diese Daten über die Schnittstelle (IC) an die erste Einheit (REC) übertragen werden.

3. Verfahren nach Anspruch 1 oder 2, **dadurch gekennzeichnet, dass** die Daten über die serielle Schnittstelle (IC) im Zeitmultiplex übertragen werden.

4. Verfahren nach Anspruch 1, **dadurch gekennzeichnet, dass** der Funkzugangspunkt (AP) des zweiten Mobilfunksystems und die Hochfrequenzeinheit (RF) der Basisstation (BS) des ersten Mobilfunksystems baulich in eine gemeinsame Einheit (RE) integriert oder separat voneinander ausgeführt sind, wobei die Daten des zweiten Mobilfunksystems Eingangsdaten oder Ausgangsdaten des Funkzugangspunkt (AP) sind.

5. Verfahren nach einem der vorhergehenden Ansprüche, **dadurch gekennzeichnet, dass** die Basisstation (BS) des ersten Mobilfunksystems und der Funkzugangspunkt (AP) des zweiten Mobilfunksystems zu übertragende Signale (F1, F2) mit einer gemeinsamen Sende- und/oder Empfangsantenne (A) senden bzw. empfangen.

6. Verfahren nach einem der vorhergehenden Ansprüche, **dadurch gekennzeichnet, dass** die Daten (IQ) des ersten Mobilfunksystems einer physikalischen Schicht und die Daten (IP) des zweiten Mobilfunksystems einer höheren Schicht eines Schichtenmodells zugeordnet werden.

7. Verfahren nach Anspruch 1, **dadurch gekennzeichnet, dass** die serielle Schnittstelle (IC) entsprechend dem Common Public Radio Interface-Standard betrieben wird.

8. Verfahren nach einem der vorhergehenden Ansprüche, **dadurch gekennzeichnet, dass** eines der beiden Mobilfunksysteme zellular und das andere Mobilfunksystem nicht-zellular betrieben wird.

9. Basisstation (BS) für ein erstes Mobilfunksystem
- mit einer ersten Einheit (REC) und mit einer zweien Einheit (RE), zwischen denen Daten des ersten Mobilfunksystems innerhalb der Basisstation (BS) übertragen werden,
- mit einer seitens der ersten Einheit(REC) angeordneten Basisbandeinheit (BB), in der Daten (IQ) des ersten Mobilfunksystems im Basisband verarbeitet werden,
- mit einer seriellen Schnittstelle (IC), über die die im Basisband verarbeiteten Daten (IQ) des ersten Mobilfunksystems zwischen der Basisbandeinheit (BB) der ersten Einheit (REC) und einer Hochfrequenzeinheit (RF) der zweiten Einheit (RE) übertragen werden,
- mit der seitens der zweiten Einheit (RE) angeordneten Hochfrequenzeinheit (RF), in der die Daten (IQ) des ersten Mobilfunksystems vom bzw. in den Hochfrequenzbereich umgesetzt werden,
**gekennzeichnet durch**
- Mittel (C1; C2), die zum Übertragen von zu sendenden Daten (IP) eines zweiten Mobilfunksystems von der ersten Einheit (REC) über die Schnittstelle (IC) zur zweiten Einheit (RE) zusammen mit den im Basisband verarbeiteten Daten (IQ) des ersten Mobilfunksystems ausgebildet sind, wobei die Daten (IP) des zweiten Mobilfunksystems noch vor einer Bearbeitung im Basisband über die Schnittstelle (IC) übertragen werden,
- einen Funkzugangspunkt (AP) des zweiten Mobilfunksystems, der die über die Schnittstelle (IC) übertragenen Daten (IP) des zweiten Mobilfunksystems im Basisband bearbeitet und in den Hochfrequenzbereich umsetzt.

10. Basisstation nach Anspruch 10, deren Hochfrequenzeinheit (RF) und ein Funkzugangspunkt (AP) des zweiten Mobilfunksystems, von dem die Daten des zweiten Mobilfunksystems zu übertragen sind, in einer gemeinsamen Einheit (RE) baulich integriert sind.

## Claims

1. Method for transmitting data between a first unit (REC) and a second unit (RE) within a base station (BS) of a first mobile radio system,
- in which data (IQ) of the first mobile radio system are processed in the baseband by the first unit (REC) in a baseband unit (BB),
- in which the data (IQ), processed in the baseband, of the first mobile radio system are transmitted via a serial interface (IC) between the baseband unit (BB) of the first unit (REC) and a radio frequency unit (RF) of the second unit (RE),
- in which the data (IQ) of the first mobile radio system are converted by the second unit (RE) in the radio frequency unit (RF) from and into the radio frequency band, respectively,
**characterized in that**
- data (IP) of a second mobile radio system, to be transmitted, are transmitted, before processing in the baseband by the first unit (REC), together with the data (IQ) to be processed in the baseband of the first mobile radio system, via the interface (IC), to the second unit (RE), and
- the data (IP) of the second mobile radio system, transmitted via the interface (IC), are both processed in the baseband and converted into the radio frequency band in a radio access point (AP) of the second mobile radio system.

2. Method according to Claim 1, **characterized in that**
- received data (IP) of the second mobile radio system are converted from the radio frequency band and processed in the baseband in the radio access point (AP), and
- **in that** these data are transmitted to the first unit (REC) via the interface (IC).

3. Method according to Claim 1 or 2, **characterized in that** the data are transmitted in time-division multiplex via the serial interface (IC).

4. Method according to Claim 1, **characterized in that** the radio access point (AP) of the second mobile radio system and the radio frequency unit (RF) of the base station (BS) of the first mobile radio system are constructionally integrated in a common unit (RE) or arranged separately of one another, wherein the data of the second mobile radio system are input data or output data of the radio access point (AP).

5. Method according to one of the preceding claims, **characterized in that** the base station (BS) of the first mobile radio system and the radio access point (AP) of the second mobile radio system transmit and receive, respectively, signals (F1, F2) to be transmitted by means of a common transmitting and/or receiving antenna (A).

6. Method according to one of the preceding claims, **characterized in that** the data (IQ) of the first mobile radio system are allocated to a physical layer and the data (IP) of the second mobile radio system are allocated to a higher layer of a layer model.

7. Method according to Claim 1, **characterized in that** the serial interface (IC) is operated in accordance with the Common Public Radio Interface standard.

8. Method according to one of the preceding claims, **characterized in that** one of the two mobile radio systems is operated in cellular manner and the other mobile radio system is operated in noncellular manner.

9. Base station (BS) for a first mobile radio system,
- comprising a first unit (REC) and comprising a second unit (RE) between which data of the first mobile radio system are transmitted within the base station (BS),
- comprising a baseband unit (BB), arranged at the first unit (REC), in which data (IQ) of the first mobile radio system are processed in the baseband,
- comprising a serial interface (IC) via which the data (IQ), processed in the baseband, of the first mobile radio system are transmitted between the baseband unit (BB) of the first unit (REC) and a radio frequency unit (RF) of the second unit (RE),
- comprising the radio frequency unit (RF) arranged at the second unit (RE), in which the data (IQ) of the first mobile radio system are converted from and into the radio frequency band, respectively,
**characterized by**
- means (C1; C2) which are arranged for transmitting data (IP) of a second mobile radio system to be transmitted from the first unit (REC) via the interface (IC) to the second unit (RE) together with the data (IQ), processed in the baseband, of the first mobile radio system, wherein the data (IP) of the second mobile radio system are transmitted via the interface (IC) even before being processed in the baseband,
- a radio access point (AP) of the second mobile radio system which processes the data (IP) of the second mobile radio system, transmitted via the interface (IC), in the baseband and converts them into the radio frequency band.

10. Base station according to Claim 10, the radio frequency unit (RF) of which and a radio access point (AP) of the second mobile radio system from which the data of the second mobile radio system are to be transmitted are constructionally integrated in a common unit (RE).

## Revendications

1. Procédé de transmission de données entre une première unité (REC) et une deuxième unité (RE) à l'intérieur d'une station de base (BS) d'un premier système radio mobile, dans lequel
- des données (IQ) du premier système radio mobile sont traitées, du côté de la première unité (REC), en bande de base dans une unité de bande de base (BB),
- les données (IQ) du premier système radio mobile traitées en bande de base sont transmises entre l'unité de bande de base (BB) de la première unité (REC) et une unité haute fréquence (RF) de la deuxième unité (RE) via une interface série (IC),
- les données (IQ) du premier système radio mobile sont converties, du côté de la deuxième unité (RE), dans l'unité haute fréquence (RF) à partir de resp. vers la plage haute fréquence,
**caractérisé en ce que**
- des données à émettre (IP) d'un deuxième système radio mobile sont transmises, avant un traitement en bande de base, de la première unité (REC) vers la deuxième unité (RE) via l'interface (IC) conjointement avec les données (IQ) du premier système radio mobile traitées en bande de base et
- les données (IP) du deuxième système radio mobile transmises via l'interface (IC) sont, en un point d'accès radio (AP) du deuxième système radio mobile, non seulement traitées en bande de base, mais encore, converties dans la plage haute fréquence.

2. Procédé selon la revendication 1, **caractérisé en ce que**
- des données reçues (IP) du deuxième système radio mobile sont, au point d'accès radio (AP), converties à partir de la plage haute fréquence et traitées en bande de base et
- ces données sont transmises via l'interface (IC) à la première unité (REC).

3. Procédé selon la revendication 1 ou 2, **caractérisé en ce que** les données sont transmises via l'interface série (IC) par multiplexage temporel.

4. Procédé selon la revendication 1, **caractérisé en ce que** le point d'accès radio (AP) du deuxième système radio mobile et l'unité haute fréquence (RF) de la station de base (BS) du premier système radio mobile sont de construction intégrée dans une unité commune (RE) ou sont réalisés séparément l'un de l'autre, les données du deuxième système radio mobile étant des données d'entrée ou des données de sortie du point d'accès radio (AP).

5. Procédé selon l'une des revendications précédentes, **caractérisé en ce que** la station de base (BS) du premier système radio mobile et le point d'accès radio (AP) du deuxième système radio mobile émettent resp. reçoivent, au moyen d'une antenne émettrice et/ou réceptrice commune (A), des signaux (F1, F2) à transmettre.

6. Procédé selon l'une des revendications précédentes, **caractérisé en ce que** les données (IQ) du premier système radio mobile sont affectées à une couche physique et les données (IP) du deuxième système radio mobile sont affectées à une couche supérieure d'un modèle de couches.

7. Procédé selon la revendication 1, **caractérisé en ce que** l'interface série (IC) fonctionne selon la norme «Common Public Radio Interface».

8. Procédé selon l'une des revendications précédentes, **caractérisé en ce que** l'exploitation de l'un des deux systèmes radio mobiles est cellulaire et celle de l'autre système radio mobile est non cellulaire.

9. Station de base (BS) pour un premier système radio mobile,
- avec une première unité (REC) et une deuxième unité (RE) entre lesquelles des données du premier système radio mobile sont transmises à l'intérieur de la station de base (BS),
- avec une unité de bande de base (BB) située du côté de la première unité (REC) et dans laquelle des données (IQ) du premier système radio mobile sont traitées en bande de base,
- avec une interface série (IC) via laquelle les données (IQ) du premier système radio mobile traitées en bande de base sont transmises entre l'unité de bande de base (BB) de la première unité (REC) et une unité haute fréquence (RF) de la deuxième unité (RE),
- avec l'unité haute fréquence (RF) située du côté de la deuxième unité (RE) et dans laquelle les données (IQ) du premier système radio mobile sont converties à partir de resp. vers la plage haute fréquence,
**caractérisée par**
- des moyens (C1; C2) qui sont réalisés pour transmettre des données à émettre (IP) d'un deuxième système radio mobile, de la première unité (REC) vers la deuxième unité (RE) via l'interface (IC) conjointement avec les données (IQ) du premier système radio mobile traitées en bande de base, les données (IP) du deuxième système radio mobile étant transmises via l'interface (IC) avant un traitement en bande de base,
- un point d'accès radio (AP) du deuxième système radio mobile, lequel point traite les données (IP) du deuxième système radio mobile transmises via l'interface (IC) et les convertit dans la plage haute fréquence.

10. Station de base selon la revendication 10, dont l'unité haute fréquence (RF) et un point d'accès radio (AP) du deuxième système radio mobile par lequel les données du deuxième système radio mobile doivent être transmises sont de construction intégrée dans une unité commune (RE).
